(19) Europäisches Patentamt / European Patent Office / Office européen des brevets

(11) **EP 4 517 373 A1**

(12) **EUROPEAN PATENT APPLICATION**

(43) Date of publication:
05.03.2025 Bulletin 2025/10

(21) Application number: 24187193.8

(22) Date of filing: 08.07.2024

(51) International Patent Classification (IPC):
**G01S 7/4861** (2020.01)    **G01S 7/4865** (2020.01)
**G01S 7/487** (2006.01)    **G01S 7/497** (2006.01)
**G01S 17/10** (2020.01)    **G01S 17/931** (2020.01)
**G01S 7/292** (2006.01)

(52) Cooperative Patent Classification (CPC):
**G01S 7/4865; G01S 7/4861; G01S 7/4873;
G01S 7/497; G01S 17/10; G01S 17/931;**
G01S 7/2922

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 30.08.2023 CN 202311104964

(71) Applicant: **Suteng Innovation Technology Co.,
Ltd.
Shenzhen City Guangdong 518000 (CN)**

(72) Inventor: **Huang, Zhoumin
Shenzhen, 518000 (CN)**

(74) Representative: **RGTH
Patentanwälte PartGmbB
Neuer Wall 10
20354 Hamburg (DE)**

(54) **A LIDAR RECEIVING CONTROL METHOD, DEVICE, AND LIDAR**

(57) The embodiments of the present invention disclose a LiDAR receiving control method, device, and LiDAR. The method first determines the echo characteristic value of the echo signals in the response period, then determines the baseline voltage fluctuation based on the echo characteristic value, next determines the target sampling threshold, and finally adjusts the threshold of the next response period according to the target sampling threshold. This receiving control method compensates for the sampling threshold, obtaining a compensated target sampling threshold, achieving accurate sampling of the echo signals, and improving ranging performance. This receiving control method adjusts the sampling threshold in real-time based on the impact of the received echo signals on the baseline voltage, ensuring that the adjusted sampling threshold follows the trend of baseline voltage fluctuation, making the target sampling threshold more compatible with the echo signals, further improving sampling accuracy.

S100

| S11 | Determine an echo characteristic value of an echo signal of a response period |
| S12 | Determine a baseline voltage fluctuation based on the echo characteristic value |
| S13 | Determine the target sampling threshold based on the baseline voltage fluctuation and the sampling threshold of the response period |
| S14 | Adjust a threshold of a next response period according to the target sampling threshold |

Fig.5

**EP 4 517 373 A1**

## Description

TECHNICAL FIELD

The embodiments of the present invention relate to the field of LiDAR technology, particularly to a LiDAR receiving control method, device, and LiDAR.

BACKGROUND

With the rapid development of LiDAR technology, LiDAR products are widely used in scenarios such as autonomous driving, vehicle-mounted LiDAR, and vehicle-road collaboration. LiDAR technology involves emitting a detection laser beam to the object being measured, receiving the light signal reflected from the object, and processing and analyzing the received light signal to obtain parameters such as the distance, orientation, height, and shape of the object being measured. Due to the baseline voltage fluctuation caused by the components in the receiving circuit when receiving echo signals, this results in inaccurate sampling of the echo signals by the LiDAR, leading to poor ranging performance.

SUMMARY

Embodiments of the present invention provide a LiDAR receiving control method, device, and LiDAR, capable of real-time adjustment of the sampling threshold based on the received echo signals to achieve accurate sampling of echo signals, thereby improving ranging performance.

In a first aspect, an embodiment of the present invention provides a LiDAR receiving control method, which includes: determining an echo characteristic value of an echo signal of a response period; determining a baseline voltage fluctuation based on the echo characteristic value; determining a target sampling threshold according to the baseline voltage fluctuation and a sampling threshold of the response period; adjusting a threshold of a next response period according to the target sampling threshold.

In a second aspect, an embodiment of the present invention provides a LiDAR receiving control device, which includes: a first determining module, configured to determine an echo characteristic value of an echo signal of a response period; a second determining module, configured to determine a baseline voltage fluctuation based on the echo characteristic value; a third determining module, configured to determine a target sampling threshold according to the baseline voltage fluctuation and a sampling threshold of the response period; an adjusting module, configured to adjust a threshold of a next response period according to the target sampling threshold.

In the third aspect, an embodiment of the present invention provides a LiDAR, which includes: at least one processor; a memory in communication with the at least one processor; wherein the memory stores instructions executable by the at least one processor to cause the at least one processor to perform the LiDAR receiving control method embodiments.

In the fourth aspect, an embodiment of the present invention provides a computer-readable storage medium, wherein the computer-readable storage medium stores computer-executable instructions, which, when executed by a computer device, cause the computer device to perform the LiDAR receiving control method embodiments.

The LiDAR receiving control method provided by the embodiments of the present invention determines the echo characteristic value of the echo signals in the response period, determines the baseline voltage fluctuation based on the echo characteristic value, then determines the target sampling threshold according to the baseline voltage fluctuation and the sampling threshold of the response period, and adjusts the threshold of the next response period according to the target sampling threshold. This receiving control method compensates for the sampling threshold, obtaining a compensated target sampling threshold, achieving accurate sampling of the echo signals, and improving ranging performance. This receiving control method adjusts the sampling threshold in real-time based on the impact of the received echo signals on the baseline voltage, ensuring that the adjusted sampling threshold follows the trend of baseline voltage fluctuation, making the target sampling threshold more compatible with the echo signals, further improving sampling accuracy.

BRIEF DESCRIPTION OF DRAWINGS

One or more embodiments are illustratively described in conjunction with the corresponding drawings. Elements marked with the same reference numbers in the drawings represent similar elements.

FIG. 1 is a schematic diagram of an application scenario of a LiDAR receiving control method provided by an embodiment;
FIG. 2 is a schematic diagram of the structure of a LiDAR provided by an embodiment;
FIG. 3 is a schematic diagram of the structure of a receiving device provided by an embodiment;
FIG. 4 is a schematic diagram of the detection module sampling the echo signals provided by an embodiment;
FIG. 5 is a flowchart of the LiDAR receiving control method provided by an embodiment;
FIG. 6 is a flowchart of step S11 in FIG. 5;
FIG. 7 is a flowchart of step S12 in FIG. 5;
FIG. 8 is a schematic diagram of the LiDAR receiving control device provided by an embodiment;
FIG. 9 is a schematic diagram of the structure of a LiDAR provided by an embodiment.

## DETAILED DESCRIPTION

The features in the embodiments of the invention can be combined with each other. In addition, although functional modules are divided in the device schematic diagram and the logical order is shown in the flowchart, in some cases, the steps shown or described can be performed in a different order or with different module divisions. Furthermore, the terms "first," "second," "third," etc., used herein do not limit the data and execution order but merely distinguish items or similar items with similar functions and effects.

The term "and/or" used herein includes any and all combinations of one or more of the listed items.

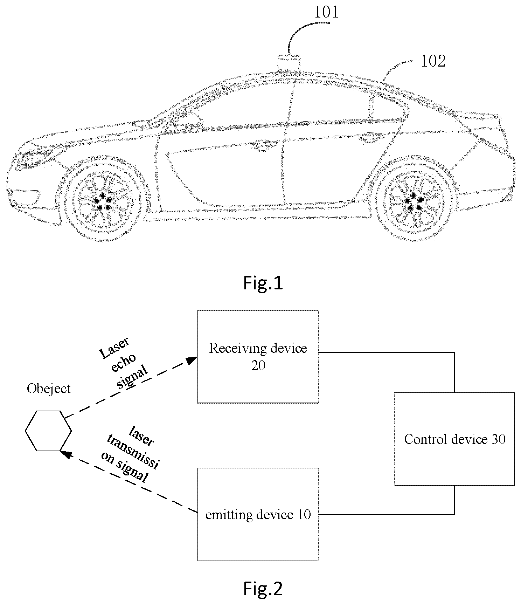

Refer to FIG. 1, which is a schematic diagram of an application scenario of a LiDAR receiving control method provided by an embodiment. As shown in FIG. 1, the application scenario includes a LiDAR 101 and a vehicle 102. The LiDAR 101 is installed on various vehicles 102 that to detect the surrounding scenario, such as cars, ships, aircraft, etc.

In an embodiment, the vehicle 102 is a car, the LiDAR 101 can be installed on the front, rear, roof, side body, or any other body position of the car where the LiDAR 101 can be fixed. The LiDAR 101 can be fixed on other external device structure platforms connected to the car. The external device structure platform can maintain synchronous operation with the vehicle during its operation.

In an embodiment, refer to FIG. 2, which is a schematic diagram of the structure of a LiDAR 101. The LiDAR 101 includes an emitting device 10, a receiving device 20, and a control device 30, the emitting device 10 is used to emit laser transmission signals, which are emitted to the object to be measured and then reflected by the object, returning as laser echo signals, the receiving device 20 (also referred to as a receiving module) is used to receive the laser echo signals, the control device 30 is used to receive and process the data related to the echo signals sent by the receiving device 20, and control the emitting device 10 to emit laser transmission signals.

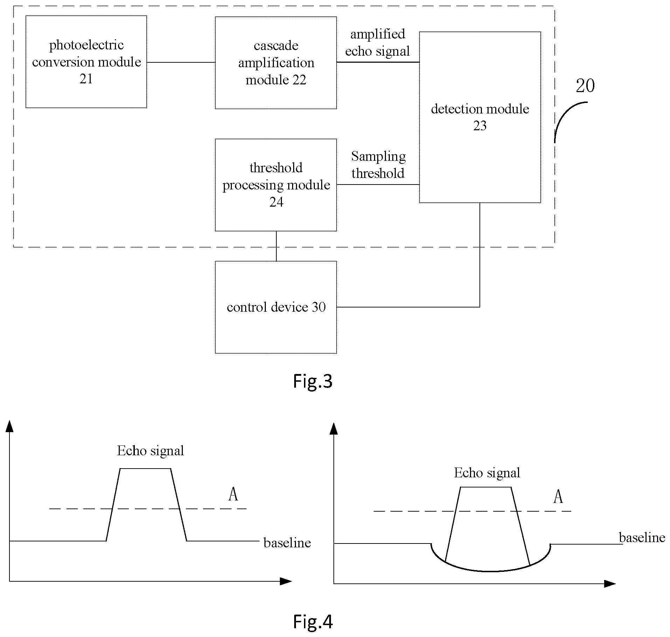

In an embodiment, refer to FIG. 3, which is a schematic diagram of the structure of a receiving device 20. As shown in FIG. 3, the receiving device 20 includes a photoelectric conversion module 21, a cascade amplification module 22, a detection module 23, and a threshold processing module 24. An input end of the photoelectric conversion module 21 receives the laser echo signals, and an output end of the photoelectric conversion module 21 is connected to an input end of the cascade amplification module 22. The photoelectric conversion module 21, which serves as the receiving sensor, converts the laser echo signals into pulse electrical signals. The photoelectric conversion module 21 can be a PIN-type photodetector or an avalanche photodiode (APD). Due to the internal gain of the avalanche photodiode, it significantly enhances the sensitivity of the photoelectric sensor.

The cascade amplification module 22 can includes multiple gain circuits to amplify the input pulse electrical signals step-by-step, obtaining multi-stage amplified echo signals. The cascade amplification module 22 can includes a transimpedance amplifier to convert the pulse electrical signals from current to voltage.

An output end of the cascade amplification module 22 is connected to the first input end of the detection module 23. The multi-stage amplified echo signals are transmitted to the first input end of the detection module 23. The input end of the threshold processing module 24 is connected to the control device 30, and the output end of the threshold processing module 24 is connected to the second input end of the detection module 23. The control device 30 sends control signals to the threshold processing module 24 to make it output corresponding sampling thresholds. The sampling threshold provided by the threshold processing module 24 is transmitted to the second input end of the detection module 23, which samples the echo signals based on the amplified echo signals and the sampling threshold.

In an embodiment, the detection module 23 can be a TDC (time-to-digital converter) that samples the echo signals, obtains the reception time of the echo signals, and transmits this time to the control device 30. The control device 30 calculates the laser flight time based on the reception time, thereby determining the distance of the measured object.

The control device 30 can be a general processor, digital signal processor (DSP), application-specific integrated circuit (ASIC), field-programmable gate array (FPGA), microcontroller, ARM, or other programmable logic devices, discrete gate or transistor logic, discrete hardware components, or any combination of these. The control device 30 can be any traditional processor, controller, microcontroller, or state machine. It can also be implemented as a combination of computing devices, such as a combination of DSP and microprocessor, multiple microprocessors, one or more microprocessors combined with DSP and/or any other such configuration, or a combination of microcontroller unit (MCU), FPGA, system-on-chip (SoC), etc.

In an embodiment, the control device 30 includes a storage module, which may include but is not limited to Flash memory, NAND flash memory, vertical NAND (VNAND), NOR flash memory, resistive random-access memory (RRAM), magnetoresistive random-access memory (MRAM), ferroelectric random-access memory (FRAM), spin-transfer torque random-access memory (STT-RAM), or any combination of these.

In an embodiment, the detection module 23 sampling the echo signals is shown in the left part of FIG. 4, where the sampling threshold is A. The sampling threshold A is compared with the echo signals. When the rising edge of the echo signals crosses the sampling threshold A, the detection module 23 outputs a sampling result. When the falling edge of the echo signals crosses the sampling threshold A, another sampling result is output. Combining the two sampling results, the characteristics of the echo signals, such as the reception time, is obtained.

The receiving device 20 includes an AC coupling circuit. During signal transmission, there will be a charge and discharge of small capacitance capacitors, causing the baseline voltage of the echo signals to drop. If the original sampling threshold A is used, but the baseline voltage drops (as shown in the right part of FIG. 4), it may lead to inaccurate sampling of the echo signals, thereby affecting the receiving device's ability to sample weak echo signals and reducing the LiDAR's ranging capability.

To address the above issues, embodiments of the invention provide a LiDAR receiving control method. This method determines the echo characteristic value of the echo signals in the response period, determines the baseline voltage fluctuation based on the echo characteristic value, determines the target sampling threshold according to the baseline voltage fluctuation and the sampling threshold of the response period, and adjusts the threshold of the next response period according to the target sampling threshold. This receiving control method compensates for the sampling threshold, obtaining a compensated target sampling threshold, ensuring accurate sampling of echo signals and improving ranging accuracy. This receiving control method adjusts the sampling threshold in real-time based on the impact of the received echo signals on the baseline voltage, ensuring that the adjusted sampling threshold follows the trend of baseline voltage fluctuation, making the target sampling threshold more compatible with the echo signals, further improving sampling accuracy.

The LiDAR receiving control method provided by the embodiments of the invention can be executed by the control device 30 or processor, or by other devices with computing capabilities. It can also run on a von Neumann architecture-based LiDAR signal processing device. This computer program can be integrated into an application or run as an independent tool application. The LiDAR-based signal processing device can be a LiDAR-based scanning system, receiving system, signal processing system, etc.

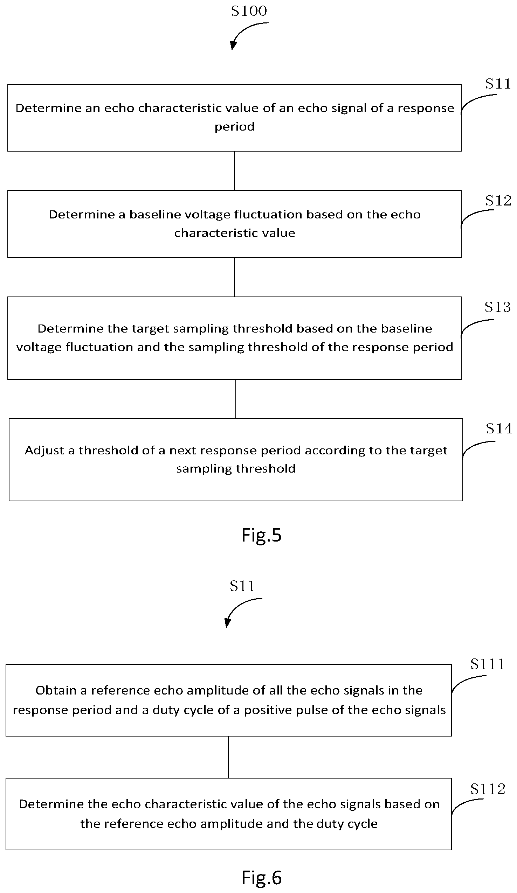

Refer to FIG. 5, which is a flowchart of the LiDAR receiving control method provided by an embodiment. As shown in FIG. 5, the method S100 include the following steps:

S11: Determine an echo characteristic value of an echo signal of a response period;
The response period is a period during which the threshold processing module adjusts the sampling threshold. The threshold processing module can adjust the sampling threshold once every response period. Due to the hardware performance limitations of the threshold processing module, the adjustment frequency of the sampling threshold cannot be very high. Usually, one response period can include multiple detection periods, and each detection period includes at least one echo signal. Therefore, multiple echo signals can be included in one response period.

The echo characteristic value characterizes the echo energy of the echo signals. The larger the echo characteristic value, the greater the impact on the baseline voltage, and the greater the baseline voltage fluctuation.

The echo characteristic value can be determined based on the duty cycle of the positive pulse of the echo signals and the reference echo amplitude. In an embodiment, as shown in FIG. 6, step S11 includes:

Sill: Obtain a reference echo amplitude of all the echo signals in the response period and a duty cycle of a positive pulse of the echo signals;
The reference echo amplitude characterizes the fluctuation amplitude of the echo signals and can be determined by various methods. In an embodiment, directly calibrate the saturated signal's Vp as the calibration value and store it in memory. When determining the reference echo amplitude, read the calibration value and use it as the reference echo amplitude. Since the energy of unsaturated echo signals is relatively small and not significantly different, it has little impact on the baseline fluctuation. Therefore, directly calibrate the saturated signal and use the echo amplitude Vp of the saturated signal as the reference echo amplitude.

In an embodiment, sampling all the echo signals based on the set sampling threshold to obtain sampling results, and determine the reference echo amplitude based on the sampling results. Echo signals lower than the set sampling threshold are not sampled, indicating that their energy is small and has little impact on the baseline voltage fluctuation, so they are not used to calculate the echo characteristic value. Echo signals higher than the set sampling threshold have large energy and significantly impact the baseline voltage fluctuation, and are used to calculate the echo characteristic value.

The sampling result obtained is a pair of data, namely (t1, v1) and (t2, v1), where t1 is the time when the rising edge of the echo signals crosses the sampling threshold v1, and t2 is the time when the falling edge of the echo signals crosses the sampling threshold v1, and v1 is the set sampling threshold. Based on the sampling result, the echo amplitude of the echo signals can be calculated and used as the reference echo amplitude.

The set sampling threshold is not set too high or too low, generally taking a value between zero and saturation. The set sampling threshold can reuse the sampling threshold of the LiDAR system to save device consumption, typically reusing the middle sampling threshold of the LiDAR system's multiple sampling thresholds. The echo signals are sampled by the detection module in the LiDAR system, or by other sampling systems. The sampling result is sent to the control device and stored in the register of the control device, from which the control device obtains the sampling result corresponding to the set sampling threshold for processing and analysis, thereby obtaining the reference echo amplitude.

If multiple echo signals are included in the response period, each echo signal will be sampled to obtain its corresponding sampling result. Then, based on each sampling result, its corresponding reference echo amplitude is obtained, and the reference echo amplitude of all echo signals in the response period is obtained by summing the reference echo amplitudes corresponding to each echo signal. In an embodiment, three echo signals are included in the response period, the set sampling threshold is used to sample the three echo signals respectively, obtaining three sampling results, namely (t1, v1) and (t2, v1), (t3, v1) and (t4, v1), and (t5, v1) and (t6, v1). Based on (t1, v1) and (t2, v1), the reference echo amplitude Vp1 corresponding to the first echo signal is obtained. Based on (t3, v1) and (t4, v1), the reference echo amplitude Vp2 corresponding to the second echo signal is obtained. Based on (t5, v1) and (t6, v1), the reference echo amplitude Vp3 corresponding to the third echo signal is obtained. The reference echo amplitude of all echo signals in the response period is Vp = Vp1 + Vp2 + Vp3. The method of obtaining the reference echo amplitude for each echo signal through the sampling threshold is similar to the foregoing.

In an embodiment, sampling all the echo signals based on multiple set sampling thresholds to obtain multiple sampling results, and determine the reference echo amplitude based on a weighted average of the multiple sampling results.

In an embodiment, the response period includes three echo signals and three set sampling thresholds v1, v2, and v3 are used to sample all the echo signals, the sampling results for the first echo signal are (t1, v1) and (t2, v1), (t3, v2) and (t4, v2), and (t5, v3) and (t6, v3). The reference echo amplitude Vp1 is obtained based on (t1, v1) and (t2, v1), the second reference echo amplitude is obtained based on (t3, v2) and (t4, v2), and the third reference echo amplitude is obtained based on (t5, v3) and (t6, v3). The weighted average of the first, second, and third reference echo amplitudes gives the corresponding reference echo amplitude Vp1. Because the echo signals sampled with high thresholds have higher amplitudes and greater energy, the weighted coefficient for high thresholds in calculating the reference echo amplitude Vp1 is high.

In an embodiment, the reference echo amplitude Vp2 for the second echo signal is obtained by weighted averaging the sampling results, and the reference echo amplitude Vp3 for the third echo signal is obtained by weighted averaging the sampling results. The reference echo amplitude of all echo signals in the response period is Vp = Vp1 + Vp2 + Vp3.

S112: Determine the echo characteristic value of the echo signals based on the reference echo amplitude and the duty cycle.

In an embodiment, the echo characteristic value of the echo signals is determined by the following formula:

$$E = Vp * Ton / T,$$

where E is the echo characteristic value, Vp is the reference echo amplitude, Ton is the duration of the positive pulse of all the echo signals in the response period, T is the response period, and Ton/T is the duty cycle.

The positive pulse of the echo signals represents the part of the echo signals that exceeds the set sampling threshold during sampling. If the sampling result of the set sampling threshold v1 is (t1, v1) and (t2, v1), the duration of the positive pulse is (t2 - t1). If the response period includes multiple echo signals, the duration of the positive pulses corresponding to each echo signal is accumulated to obtain Ton. In an embodiment, the response period includes three echo signals, the set sampling threshold is used to sample the three echo signals respectively, obtaining three sampling results, namely (t1, v1) and (t2, v1), (t3, v1) and (t4, v1), and (t5, v1) and (t6, v1). The duration of the positive pulse is (t2 - t1) + (t4 - t3) + (t6 - t5).

T is a known constant, Vp, and Ton can be measured values, sequentially output discrete values based on the reception sequence, or values calculated in real-time based on the sampling results. The control device receives Vp and Ton, and based on these, calculates the echo characteristic value of the echo signals.

S12: Determine a baseline voltage fluctuation based on the echo characteristic value;

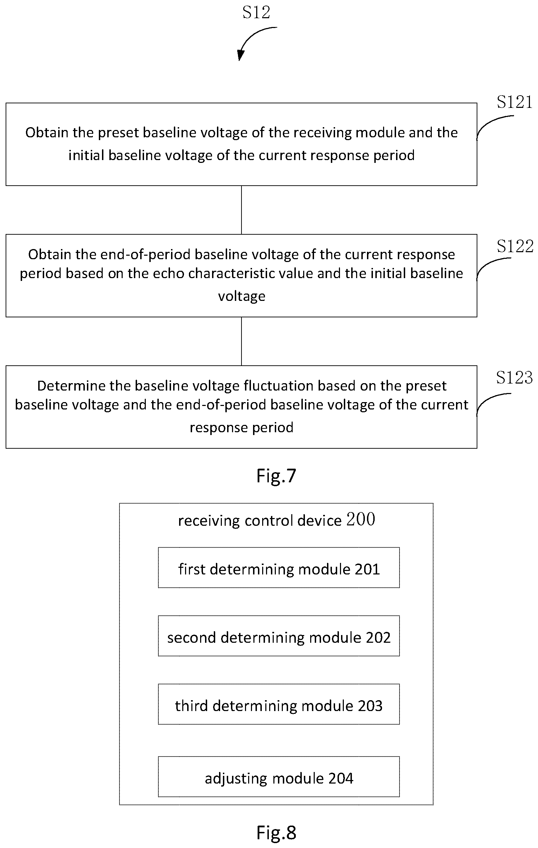

The larger the echo characteristic value, the greater the impact on the baseline voltage, and thus the greater the baseline voltage fluctuation. In an embodiment, as shown in FIG. 7, step S12 includes:

S121: Obtain the preset baseline voltage of the receiving module and the initial baseline voltage of the current response period;

The preset baseline voltage is a set value. In an embodiment, the preset baseline voltage is the design value of the LiDAR system, an ideal voltage value without fluctuations. The initial baseline voltage is the baseline voltage at the start of the response period, and the end-of-period baseline voltage is the baseline voltage at the end of the response period. The end-of-period baseline voltage of the previous response period is the initial baseline voltage of the current response period, and the end-of-period baseline voltage of the current response period is the initial baseline voltage of the next response period. Since at least one echo signal is received in each response period, the circuit of the receiving device continues to charge and discharge, and the baseline voltage fluctuation is continuously accumulated. Each response period changes further based on the fluctuation amount of the previous response period.

S122: Obtain the end-of-period baseline voltage of the current response period based on the echo characteristic value and the initial baseline voltage;

Obtain the reference baseline voltage based on the echo characteristic value and the initial baseline voltage, and then obtain the end-of-period baseline voltage based on the reference baseline voltage and the recovery coefficient, where the recovery coefficient is the coefficient for recovering the baseline voltage to the preset baseline voltage after the baseline voltage is offset.

In an embodiment, the reference baseline voltage is determined by the following formula:

$$Vb1 = -E + Vb0,$$

where Vb1 is the reference baseline voltage, E is the echo characteristic value, and Vb0 is the initial baseline voltage.

After the baseline voltage drops, it will gradually recover to the preset baseline voltage. Due to different hardware performance, the recovery time required for different systems varies, and the recovery coefficient characterizes the speed of recovery to the preset baseline voltage.

The recovery coefficient can be a directly set constant K or a time function F(t), which can be obtained through simulation or measured fitting.

After obtaining the reference baseline voltage, in an embodiment, the end-of-period baseline voltage can be determined by the following formula:

$$Vb1' = Vb1 * F(t);$$

or,

$$Vb1' = Vb1 * K,$$

where Vb1' is the end-of-period baseline voltage. Since the end-of-period baseline voltage of the current response period is obtained, t = T is substituted into the time function F(t) to obtain the end-of-period recovery coefficient K of the current response period.

S123: Determine the baseline voltage fluctuation based on the preset baseline voltage and the end-of-period baseline voltage of the current response period.

Determine that the difference between the end-of-period baseline voltage and the preset baseline voltage is the baseline voltage fluctuation. From the difference between the end-of-period baseline voltage and the preset baseline voltage, the fluctuation amount of the baseline voltage at the end of the current response period can be obtained. Since the baseline voltage fluctuation affects the difference between it and the fixed sampling threshold, thereby affecting the sampling results of the echo signals, the compensation amount of the sampling threshold can be determined based on the difference between the end-of-period baseline voltage and the preset baseline voltage. This ensures that the sampling threshold follows the trend of baseline voltage fluctuation, keeping the difference between the sampling threshold and the baseline voltage stable, thereby maintaining stable sampling of the echo signals.

S13: Determine the target sampling threshold based on the baseline voltage fluctuation and the sampling threshold of the response period;

Since the baseline voltage and the sampling threshold are both voltage values, the baseline voltage fluctuation can correspond to the voltage compensation amount required for the sampling threshold, ensuring that the difference between the baseline voltage and the sampling threshold remains stable.

S14: Adjust a threshold of a next response period according to the target sampling threshold.

In an embodiment, determine that the sum of the baseline voltage fluctuation and the sampling threshold of the response period is the target sampling threshold.

The target sampling threshold is the expected threshold for the next response period. In an embodiment, the PID method can be used to control the threshold processing module to output the target sampling threshold. Determine the PID parameters according to a target sampling threshold, and then determine the control signal for the next response period based on the PID parameters. This control signal acts on the threshold processing module, making it output the corresponding target sampling threshold.

The LiDAR system can use various methods to verify whether the threshold output by the threshold processing module is the target sampling threshold. It can use instruments to test the output threshold of the threshold processing module. If the target sampling threshold is not reached, the PID parameters are fine-tuned to achieve the match.

The LiDAR system can conduct a whole-machine verification to see if the adjusted sampling threshold meets expectations.

In an embodiment, an oscilloscope is used to observe the threshold signal and echo signal output by the threshold processing circuit, observing the variation patterns of the echo signal and the threshold signal. If the waveforms of the echo signal and the threshold signal match, the echo signal rises, and the threshold signal also follows the variation pattern of the echo signal. When the echo signal decreases, the threshold signal also follows the variation pattern of the echo signal. If the threshold signal matches the echo signal, it indicates that the receiving device can accurately sample the echo signal. This verification method can be used in the design and development stage, making it easy to observe signal characteristics with an oscilloscope.

In an embodiment, set a target board with high reflectivity and low reflectivity areas adjacent to each other. Run the LiDAR system to emit and receive, observing whether the pulse width difference between the first echo signal corresponding to the high reflectivity area and the second echo signal corresponding to the low reflectivity area is less than a preset value. If the sampling threshold can follow the trend of baseline voltage fluctuation, the receiving device in the LiDAR system can accurately sample the first echo signal and the second echo signal. The pulse width difference between the first echo signal and the second echo signal should be less than the preset value, which has considered the pulse width difference of the echo signals corresponding to high and low reflectivity. This method can be used in the production stage, making it easy to set specific verification scenarios.

When the LiDAR system is operating on a vehicle, it can scan the same object in real-time with the laser. Usually, the baseline voltage fluctuation caused by the same object is due to uneven detection cycles, so the baseline voltage fluctuation characteristics are similar. By checking the consistency of the echo signal pulse width, it can evaluate whether the adjustment has reached the expected target. If the expected target is reached, the sampling threshold can follow the trend of baseline voltage fluctuation, resulting in high consistency of the echo signal pulse width.

Through the above methods, in different stages of the LiDAR system, different verification methods can be used to verify whether the receiving control method of the invention can well follow the trend of baseline voltage fluctuation, evaluating whether the adjustment of the sampling threshold meets the expected target.

Addressing the issue of baseline voltage drop caused by the circuit of the receiving device when receiving echo signals, which leads to inaccurate sampling of echo signals, the sampling threshold can be compensated based on the baseline voltage fluctuation. The compensation amount can be the baseline voltage fluctuation amount. The echo signals are sampled using the compensated sampling threshold to improve sampling accuracy. The energy of the echo signals reflected back varies depending on the object the laser is emitted at or the emission angle of the laser, or due to the aging of the whole device changes. The energy of the reflected echo signals also varies. When the echo signal energy is strong, the charge and discharge of the AC coupling capacitor are more intense, resulting in a greater drop in the baseline voltage. The fluctuation of the echo signal energy is unpredictable, and thus its impact on the baseline voltage is also unpredictable. Fixed threshold compensation cannot follow the fluctuation of the echo signal energy, resulting in low sampling accuracy of the echo signals and poor consistency of the detection signal. The receiving control method provided by the embodiments can adjust the sampling threshold in real-time, making the adjusted sampling threshold follow the trend of baseline voltage fluctuation, better matching the target sampling threshold with the echo signals, further improving sampling accuracy.

The LiDAR receiving control method provided by the embodiments determines the echo characteristic value of the echo signals in the response period, determines the baseline voltage fluctuation based on the echo characteristic value, determines the target sampling threshold according to the baseline voltage fluctuation and the sampling threshold of the response period, and adjusts the threshold of the next response period according to the target sampling threshold. This receiving control method compensates for the sampling threshold, obtaining a compensated target sampling threshold, ensuring accurate sampling of echo signals and improving ranging accuracy. This receiving control method adjusts the sampling threshold in real-time based on the impact of the received echo signals on the baseline voltage, ensuring that the adjusted sampling threshold follows the trend of baseline voltage fluctuation, making the target sampling threshold more compatible with the echo signals, further improving sampling accuracy.

Refer to FIG. 8, which is a schematic diagram of the structure of a LiDAR receiving control device provided by an embodiment. As shown in FIG. 8, the LiDAR receiving control device 200 includes a first determining module 201, a second determining module 202, a third determining module 203, and an adjusting module 204.

The first determining module 201 is used to determine an echo characteristic value of the echo signals in the response period, the second determining module 202 is used to determine a baseline voltage fluctuation based on the echo characteristic value, the third determining module 203 is used to determine a target sampling threshold according to the baseline voltage fluctuation and the sampling threshold of the response period, the adjusting module 204 is used to adjust a threshold of a next response period according to the target sampling threshold.

In an embodiment, the first determining module 201 is used to: obtain the reference echo amplitude of all the echo signals in the response period and the duty cycle of the positive pulse of the echo signals; determine the echo characteristic value of the echo signals based on the reference echo amplitude and the duty cycle.

In an embodiment, the first determining module 201 is used to: sample all the echo signals based on the set sampling threshold to obtain sampling results, and determine the reference echo amplitude based on the sampling results; or,

sample all the echo signals based on multiple set sampling thresholds to obtain multiple sampling results, and determine the reference echo amplitude based on a weighted average of the multiple sampling results.

In an embodiment, the first determining module 201 is used to: determine the echo characteristic value of the echo signals by the following formula:

$$E = Vp * Ton / T,$$

where E is the echo characteristic value, Vp is the reference echo amplitude, Ton is the duration of the positive pulse of all the echo signals in the response period, T is the response period, and Ton/T is the duty cycle.

In an embodiment, the second determining module 202 is used to: obtain the preset baseline voltage of the receiving module and the initial baseline voltage of the current response period; obtain the end-of-period baseline voltage of the current response period based on the echo characteristic value and the initial baseline voltage; determine the baseline voltage fluctuation based on the preset baseline voltage and the end-of-period baseline voltage of the current response period.

In an embodiment, obtaining the initial baseline voltage of the current response period includes:
obtaining the end-of-period baseline voltage of the last response period and determining that the end-of-period baseline voltage of the last response period is the initial baseline voltage of the current response period.

In an embodiment, the second determining module 202 is used to: obtain the reference baseline voltage based on the echo characteristic value and the initial baseline voltage; obtain the end-of-period baseline voltage based on the reference baseline voltage and the recovery coefficient, where the recovery coefficient is the coefficient for recovering the baseline voltage to the preset baseline voltage after the baseline voltage is offset.

In an embodiment, obtaining the reference baseline voltage based on the echo characteristic value and the initial baseline voltage includes:

determining the reference baseline voltage by the following formula:

$$Vb1 = -E + Vb0,$$

where Vb1 is the reference baseline voltage, E is the echo characteristic value, and Vb0 is the initial baseline voltage.

In an embodiment, determining the baseline voltage fluctuation based on the preset baseline voltage and the end-of-period baseline voltage of the current response period includes: determining that a difference between the end-of-period baseline voltage and the preset baseline voltage is the baseline voltage fluctuation.

In an embodiment, the third determining module 203 is used to: determine that the sum of the baseline voltage fluctuation and the sampling threshold of the response period is the target sampling threshold.

In an embodiment, the adjusting module 204 is used to: determine PID parameters according to the target sampling threshold; determine the control signal for an output threshold of a next response period based on the PID parameters.

In an embodiment, the LiDAR receiving control device is built with hardware devices, such as one or two or more chips, which can coordinate with each other to complete the LiDAR receiving control method described in the embodiments. For example, the LiDAR receiving control device can also be built with various logic devices, such as a general processor, digital signal processor (DSP), application-specific integrated circuit (ASIC), field-programmable gate array (FPGA), microcontroller, ARM, or other programmable logic devices, discrete gate or transistor logic, discrete hardware components, or any combination of these.

The LiDAR receiving control device provided by the embodiments can achieve the processes of the LiDAR receiving control method described in the embodiments.

The above-mentioned LiDAR receiving control device can execute the LiDAR receiving control method provided by the embodiments, having the functional modules and beneficial effects corresponding to the method. The technical details not exhaustively described in the embodiment of the LiDAR receiving control device can be referred to the LiDAR receiving control method provided by the embodiments.

The LiDAR receiving control device provided by the embodiments compensates for the sampling threshold, obtaining a compensated target sampling threshold, ensuring accurate sampling of echo signals and improving ranging accuracy. This LiDAR receiving control device adjusts the sampling threshold in real-time based on the impact of the received echo signals on the baseline voltage, ensuring that the adjusted sampling threshold follows the trend of baseline voltage fluctuation, making the target sampling threshold more compatible with the echo signals, further improving sampling accuracy.

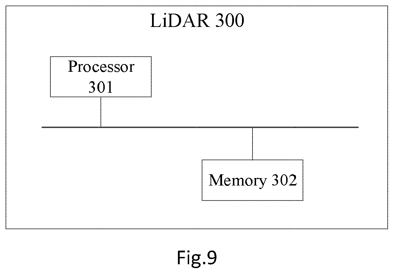

The embodiments of the invention also provide a LiDAR. Refer to FIG. 9, which is a schematic diagram of the hardware structure of a LiDAR provided by an embodiment.

As shown in FIG. 9, the LiDAR 300 includes at least one processor 301 and a memory 302 that are in communication, with the processor and memory connected via a bus.

The processor 301 provides computing and control capabilities to control the LiDAR 300 to perform corresponding tasks, such as executing the LiDAR receiving control method described in any of the method embodiments, including determining the echo characteristic value of the echo signals in the response period, determining the baseline voltage fluctuation based on the echo characteristic value, determining the target sampling threshold according to the baseline voltage fluctuation and the sampling threshold of the response period, and adjusting the threshold of the next response period according to the target sampling threshold.

In an embodiment, the LiDAR compensates for the sampling threshold, obtaining a compensated target sampling threshold, ensuring accurate sampling of echo signals and improving ranging accuracy. This LiDAR adjusts the sampling threshold in real-time based on the impact of the received echo signals on the baseline voltage, ensuring that the adjusted sampling threshold follows the trend of baseline voltage fluctuation, making the target sampling threshold more compatible with the echo signals, further improving sampling accuracy.

The processor 301 can be a general processor, including a central processing unit (CPU), a network processor (NP), a hardware chip, or any combination thereof; it can also be a digital signal processor (DSP), an application-specific integrated circuit (ASIC), a programmable logic device (PLD), or a combination thereof. The PLD can be a complex programmable logic device (CPLD), a field-programmable gate array (FPGA), a generic array logic (GAL), or any combination thereof.

The memory 302, as a non-transitory computer-readable storage medium, can be used to store non-transitory software programs, non-transitory computer-executable programs, and modules, such as the program instructions/modules corresponding to the LiDAR receiving control method in the embodiments of the invention. The processor 301, by running the non-transitory software programs, instructions, and modules stored in the memory 302, can implement the LiDAR receiving control method described in any of the method embodiments. To avoid repetition, they will not be described in detail here.

Specifically, the memory 302 can include volatile memory (VM), such as random-access memory (RAM); it can also include non-volatile memory (NVM), such as read-only memory (ROM), flash memory, hard disk drive (HDD), solid-state drive (SSD), or other non-transitory solid-state storage devices; it can also include a combination of the above types of memory.

In the embodiments of the invention, the memory 302 can also include remote memory set relative to the processor, which can be connected to the processor through a network. Examples of the network include but are not limited to the internet, intranet, local area network (LAN), mobile communication network, and their combinations.

The embodiments of the invention also provide a computer-readable storage medium, such as a memory that includes program codes, which can be executed by the processor to complete the LiDAR receiving control method described in the embodiments. For example, the computer-readable storage medium can be a read-only memory (ROM), random-access memory (RAM), compact disc read-only memory (CDROM), magnetic tape, floppy disk, optical data storage device, etc.

The embodiments of the invention also provide a computer program product, which includes one or more program codes stored in a computer-readable storage medium. The electronic device processor reads the program codes from the computer-readable storage medium, and the processor executes the program codes to complete the LiDAR receiving control method described in the embodiments.

The above-described device embodiments are only illustrative, and the units described as separate components can be physically separate or not, and the components displayed as units can be or not be physical units, they can be located in one place or distributed across multiple network units.

From the description of the above embodiments, various implementations can be realized by means of software plus a general hardware platform or by hardware. All or part of the processes in the method implementations can be completed by computer programs that instruct related hardware to complete. The programs can be stored in a computer-readable storage medium. When executed, the programs can include the processes of the methods described in the embodiments. The storage medium can be a magnetic disk, optical disk, read-only memory (ROM), or random-access memory (RAM), etc.

## Claims

1. A LiDAR receiving control method, comprising:

    determining an echo characteristic value of an echo signal of a response period;
    determining a baseline voltage fluctuation based on the echo characteristic value;
    determining a target sampling threshold according to the baseline voltage fluctuation and a sampling threshold of the response period; and
    adjusting a threshold of a next response period according to the target sampling threshold.

2. The method according to claim 1, wherein the determining the echo characteristic value of the echo signal of the response period comprises:

    obtaining a reference echo amplitude of all echo signals in the response period and a duty cycle of a positive pulse of the echo signal, wherein the all echo signals comprise at least one echo signal; and
    determining the echo characteristic value of the echo signal based on the reference echo amplitude and the duty cycle.

3. The method according to claim 2, wherein the obtaining the reference echo amplitude of all echo signals in the response period comprises:

    sampling all the echo signals according to a set sampling threshold to obtain a sampling result, and determining the reference echo amplitude according to the sampling result; or

sampling all the echo signals according to a plurality of set sampling thresholds to obtain a plurality of sampling results, and determining the reference echo amplitude according to a weighted average of the plurality of sampling results.

4. The method according to claim 2, wherein the determining the echo characteristic value of the echo signal based on the reference echo amplitude and the duty cycle comprises:

determining the echo characteristic value of the echo signal by using the following formula:

$$E = Vp*Ton/T,$$

wherein E is the echo characteristic value, Vp is the reference echo amplitude, Ton is a duration of the positive pulse of all the echo signals in the response period, T is the response period, and Ton/T is the duty cycle.

5. The method according to claim 1, wherein the determining the baseline voltage fluctuation based on the echo characteristic value comprises:

obtaining a preset baseline voltage of a receiving module and an initial baseline voltage of the current response period; obtaining an end-of-period baseline voltage of the current response period based on the echo characteristic value and the initial baseline voltage; and determining the baseline voltage fluctuation based on the preset baseline voltage and the end-of-period baseline voltage of the current response period.

6. The method according to claim 5, wherein the obtaining the initial baseline voltage of the current response period comprises:
obtaining the end-of-period baseline voltage of a last response period, and determining that the end-of-period baseline voltage of the last response period is the initial baseline voltage of the current response period.

7. The method according to claim 5, wherein the obtaining the end-of-period baseline voltage of the current response period based on the echo characteristic value and the initial baseline voltage comprises:

obtaining a reference baseline voltage based on the echo characteristic value and the initial baseline voltage; and

obtaining the end-of-period baseline voltage based on the reference baseline voltage and a recovery coefficient, wherein the recovery coefficient is a coefficient for recovering the baseline voltage to the preset baseline voltage after the baseline voltage is offset.

8. The method according to claim 7, wherein the obtaining the reference baseline voltage based on the echo characteristic value and the initial baseline voltage comprises:

obtaining the reference baseline voltage by using the following formula:

$$Vb1 = -E + Vb0,$$

wherein Vb1 is the reference baseline voltage, E is the echo characteristic value, and Vb0 is the initial baseline voltage.

9. The method according to claim 5, wherein the determining the baseline voltage fluctuation based on the preset baseline voltage and the end-of-period baseline voltage of the current response period comprises:
determining that a difference between the end-of-period baseline voltage and the preset baseline voltage is the baseline voltage fluctuation.

10. The method according to any one of claims 1 to 9, wherein the determining the target sampling threshold based on the baseline voltage fluctuation and the sampling threshold of the response period comprises:
determining that a sum of the baseline voltage fluctuation and the sampling threshold of the response period is the target sampling threshold.

11. The method according to claim 1, wherein the adjusting the threshold of the next response period according to the target sampling threshold comprises:

determining a PID parameter according to the target sampling threshold; and
determining a control signal for outputting the threshold of the next response period according to the PID parameter.

12. A LiDAR receiving control device, comprising:

a first determining module, configured to determine an echo characteristic value of an echo signal of a response period;
a second determining module, configured to determine a baseline voltage fluctuation based on the echo characteristic value;
a third determining module, configured to determine a target sampling threshold according to the baseline voltage fluctuation and a sampling threshold of the response period; and
an adjusting module, configured to adjust a threshold of a next response period according to the target sampling threshold.

13. A computer-readable storage medium, wherein the computer-readable storage medium stores computer-executable instructions, and when the computer-executable instructions are executed by a computer device, the computer device performs the LiDAR receiving control method according to any one of claims 1 to 11.

101

102

Fig.1

Fig.2

Fig.3

Fig.4

S100

Determine an echo characteristic value of an echo signal of a response period — S11

Determine a baseline voltage fluctuation based on the echo characteristic value — S12

Determine the target sampling threshold based on the baseline voltage fluctuation and the sampling threshold of the response period — S13

Adjust a threshold of a next response period according to the target sampling threshold — S14

Fig.5

S11

Obtain a reference echo amplitude of all the echo signals in the response period and a duty cycle of a positive pulse of the echo signals — S111

Determine the echo characteristic value of the echo signals based on the reference echo amplitude and the duty cycle — S112

Fig.6

S12

| S121 |
| --- |
| Obtain the preset baseline voltage of the receiving module and the initial baseline voltage of the current response period |

| S122 |
| --- |
| Obtain the end-of-period baseline voltage of the current response period based on the echo characteristic value and the initial baseline voltage |

| S123 |
| --- |
| Determine the baseline voltage fluctuation based on the preset baseline voltage and the end-of-period baseline voltage of the current response period |

Fig.7

| receiving control device 200 |
| --- |
| first determining module 201 |
| second determining module 202 |
| third determining module 203 |
| adjusting module 204 |

Fig.8

LiDAR 300

Processor
301

Memory 302

Fig.9

**Europäisches Patentamt**
**European Patent Office**
**Office européen des brevets**

# EUROPEAN SEARCH REPORT

Application Number

EP 24 18 7193

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2009 046970 B4 (ESW GMBH [DE]; LDT LASER DISPLAY TECHNOLOGY GMBH [DE]) 26 February 2015 (2015-02-26) | 1,5-13 | INV. G01S7/4861 G01S7/4865 |
| A | * paragraphs [0001] - [0009] * * paragraphs [0040] - [0048] * ----- | 2-4 | G01S7/487 G01S7/497 G01S17/10 |
| X | CN 115 932 782 A (SUTENG INNOVATION TECH CO LTD) 7 April 2023 (2023-04-07) * the whole document * ----- | 1,12,13 | G01S17/931 ADD. G01S7/292 |
| A | US 6 650 404 B1 (CRAWFORD IAN D [US]) 18 November 2003 (2003-11-18) * column 1, line 56 - column 2, line 37 * * column 5, line 50 - column 10, line 43 * ----- | 7 | |
| A | DE 10 2004 022912 A1 (IBEO AUTOMOBILE SENSOR GMBH [DE]) 8 December 2005 (2005-12-08) * the whole document * ----- | 1-13 | |

TECHNICAL FIELDS
SEARCHED (IPC)

G01S

The present search report has been drawn up for all claims

| Place of search | Date of completion of the search | Examiner |
|---|---|---|
| Munich | 12 December 2024 | Hirsch, Stefanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 7193

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2024

| Patent document cited in search report | Publication date | Patent family member(s) | Publication date |
|---|---|---|---|
| DE 102009046970 B4 | 26-02-2015 | NONE | |
| CN 115932782 A | 07-04-2023 | NONE | |
| US 6650404 B1 | 18-11-2003 | NONE | |
| DE 102004022912 A1 | 08-12-2005 | DE 102004022912 A1 | 08-12-2005 |
| | | EP 1596221 A1 | 16-11-2005 |

For more details about this annex : see Official Journal of the European Patent Office, No. 12/82